(19)

Europäisches Patentamt

European Patent Office

Office européen des brevets

(11)     **EP 4 543 976 B1**

(12)         **EUROPEAN PATENT SPECIFICATION**

(45) Date of publication and mention
of the grant of the patent:
**01.04.2026   Bulletin 2026/14**

(21) Application number: **23728833.7**

(22) Date of filing: **09.06.2023**

(51) International Patent Classification (IPC):
**C08L 1/28** *(2006.01)*          **C08J 3/05** *(2006.01)*
**D21H 19/52** *(2006.01)*        **D21H 17/26** *(2006.01)*

(52) Cooperative Patent Classification (CPC):
(C-Sets available)
**C08J 3/05; C08L 1/286; D21H 17/26;**
C08J 2301/28; C08J 2401/28           (Cont.)

(86) International application number:
**PCT/EP2023/065502**

(87) International publication number:
**WO 2023/247215 (28.12.2023 Gazette 2023/52)**

---

(54) **HIGH SOLIDS CONTENT CARBOXYMETHYLCELLULOSE SOLUTION**

CELLULOSEETHERLÖSUNG MIT HOHEM FESTSTOFFGEHALT

SOLUTION D'ÉTHER DE CELLULOSE À HAUTE TENEUR EN SOLIDES

---

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.06.2022   EP 22180926**

(43) Date of publication of application:
**30.04.2025   Bulletin 2025/18**

(73) Proprietor: **Nouryon Chemicals International B.V.
1101 BZ Amsterdam (NL)**

(72) Inventors:
• **RUTANEN, Anne Irmeli
1101 BZ Amsterdam (NL)**

• **VESANEN, Kimmo Kalevi
1101 BZ Amsterdam (NL)**
• **AHTIKARI, Jaana Mirjami
1101 BZ Amsterdam (NL)**
• **KANNIAINEN, Marko Juhani
1101 BZ Amsterdam (NL)**

(74) Representative: **Ingrassia, Fisher & Lorenz UK
Ltd.
Cambridge House
Henry Street
Bath BA1 1BT (GB)**

(56) References cited:
**WO-A1-2013/057132     US-A- 5 080 717**

---

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 1/286, C08K 5/0016, C08L 1/286;**
**C08L 1/286, C08L 1/286**

**Description**

The present invention relates to a high solids content carboxymethylcellulose solution and preparation methods thereof.

**Background**

Cellulose ethers, such as carboxymethylcellulose (CMC), are typically delivered to end-users in powder form. However, in practice, the cellulose ether is normally required in the form of an aqueous solution, so the powder generally needs to be dissolved in water prior to use. The dissolution of the powder in water can be cost ineffective for the end-user. If the cellulose ether could be delivered in a pre-dissolved, high solids content form, then that would provide a cost competitive and more sustainable alternative for these end-users.

Due to its ability to impart rheological properties, improve water retention, improve the efficiency of optical brighteners, and provide strength, CMC is a popular additive in the paper and board industry, especially for coating, sizing, and base web manufacturing. In paper and board coating processes, CMC is added as a pre-dissolved solution (typically having 6 to 12 wt. % CMC) into the coating makedown composition, which usually includes inorganic pigments, organic binders, and additives such as dispersants, optical brighteners, crosslinkers, lubricants, and dyes. CMC also can be used as, or to make, a surface treatment, such as a barrier material. Barrier materials containing CMC can provide oil and grease resistance, oxygen resistance, or both. Common film coating technologies used to form barrier layers in the shape of a film include a size press, a metering size press, and various coating technologies. For each of these technologies, viscosity and/or solids content of the polymer solution that is used plays an important role. Not wishing to be bound by any theory, it is believed that uniform barrier layers result from a high enough coat weight, good film hold-out, or both. These properties may be more easily obtained by making a barrier material with CMC solutions of higher concentration. A higher concentration of CMC in solution is frequently achieved by degrading the CMC using various technologies. However, with these technologies the molecular weight of the CMC typically decreases so drastically that the resulting barrier layers do not have very good film hold-out and penetrate into a base web and thus do not provide required barrier properties.

The existing solutions of pre-dissolved CMCs having a low solids concentration generally will not enable formulation of a high solids content coating composition, and typically limit the amount of cellulose ether that can be used in the coating composition required for paper coating. Although dry addition of cellulose ethers to a high solids pigment slurry could resolve these issues, mills would need to have handling systems for powders, adequate manpower to add the powder by hand, or a mixing system capable of imparting sufficient shear to disperse the powder throughout the solution.

It is typically a challenge to get higher than 15 wt.% cellulose ether solution solids, particularly CMC solutions, without negatively impacting pumpability of the cellulose ether solution and maintaining performance. This is notably the case for high molecular weight cellulose ethers, as higher molecular weight cellulose ethers generally give rise to more viscous solutions. The low-shear viscosity limit for good pumpability with frequently used centrifugal pumps is considered to be about 5000mPas (measured with Brookfield RV 100) at a typical process (pumping) temperature of about 25-60°C. This substantially reduces the upper concentration limit for high-Mw cellulose ether solutions, as higher concentrations of high-Mw cellulose ether solutions tend to have viscosities well in excess of these operating requirements.

As such, obtaining a high solids content cellulose ether solution containing increased quantities of high molecular weight cellulose ethers (for improved performance) whilst also maintaining low viscosity at low shear (for improved processability) is not a simple task.

Earlier solutions have been proposed to provide stable, concentrated, aqueous CMC suspensions. For example, U.S. Patent No. 4,883,537 describes aqueous CMC solutions having decreased viscosity that include at least 33 weight percent potassium carbonate. However, the high concentration of potassium carbonate required can limit the usefulness of these solutions in applications and makes these compositions less attractive/desirable for high CMC solids content applications
WO 2009/061821 discloses methods of producing low-viscosity cellulose ether compositions using a combination of a very low molecular weight cellulose ether and a plasticizer.

WO 2013/057132 discloses methods of increasing the solids content of CMC in low-viscosity compositions. It was found that these methods made it possible to increase the solids content of CMC solutions to up to about 24 wt.% while maintaining solution pumpability. However, in practice those levels could only be reached with low molecular weight cellulose ethers, which provided limited performance as a coating thickener or as a barrier. Additionally, CMC solutions prepared according to the methods of WO 2013/057132 required the solution to have a pH of 7.5-11, which was found to reduce the shelf life of the CMC solution if the CMC solution contained impurities.

US 5080717 discloses aqueous fluid suspensions of polysaccharide mixtures in paper coating compositions. These suspensions required stabilizing agents (e.g., xanthans). Suspensions can be problematic due to their propensity for the suspended solid to settle (e.g., form aggregates, thus resulting in an inhomogeneous product wherein the suspended solid is unevenly distributed). This in turn can have a negative impact upon the application properties of said suspensions (e.g., uneven application of the actives), so the products of US 5080717 still need to be dissolved before use. Solutions, on the other hand, do not suffer from this problem (i.e., the solute is evenly distributed within a homogeneous aqueous phase). Cellulose ether solutions are therefore much easier to handle and will generate more consistent results when used in the above-mentioned applications.

There remains a need for a method for preparing low viscosity carboxymethylcellulose solutions that have an increased amount of high molecular weight carboxymethylcellulose. If the CMC could be delivered in a ready-made solution with a high solids content, particularly with a high solids content of high molecular weight CMC, that would provide an improved product whilst also being a more cost effective and more sustainable alternative for end users.

**Detailed Description**

The present inventors have developed a simple, yet highly effective method for preparing carboxymethylcellulose (CMC) solutions that satisfy this need. Accordingly, in a first aspect, the present disclosure relates to a method for producing a high solids, low viscosity CMC solution, the method comprising the following steps:

a) obtaining an aqueous solution comprising at least one low molecular weight CMC having a weight average molecular weight of less than 30kDa; and

b) dissolving at least one high molecular weight CMC having a weight average molecular weight of at least 30kDa into the solution of step a), wherein the at least one high molecular weight CMC is added as a solid (preferably as a powder) to the solution of step a),

wherein the amount of low and high molecular weight CMC added in steps a) and b), respectively, is such that the total amount of CMC in the solution is at least 18 wt.%, preferably at least 20 wt.%, preferably at least 25 wt.%, preferably at least 28 wt.%, and most preferably at least 30 wt.% (in each case, wt.% being relative to the total weight of the CMC solution). In a further optional step, the CMC content (wt.%) in the final solution may be adjusted to a desired value by adding water to the CMC solution.

A surprising finding was that the total amount of the high molecular weight CMC in the solution could be substantially increased without requiring the use of stabilizing agents and whilst unexpectedly maintaining a low viscosity solution (≤5000 mPas) by adding the high molecular weight CMC as a solid, preferably as a powder, to the aqueous solution of the low molecular weight CMC of step a). This new way of combining the two different CMCs results in higher total solids contents of the CMC whilst also providing a much-improved rheological profile for such high solids content CMC solutions vis-à-vis CMC solutions produced via conventional methods.

The high molecular weight CMC in solid form, preferably in powder form, may contain substantial amounts of residual moisture when in the solid form (e.g., water of hydration or the like). It is preferred if the solid (preferably powder form) high molecular weight CMC has a total water content of less than 60 wt.%, preferably less than 50 wt.%, and more preferably less than 40 wt.% (relative to the total weight of the solid high molecular weight CMC).

The solid (preferably in powder form) high molecular weight CMC used in the above method is preferably substantially dry (i.e., subjected to a drying step prior to its use in step b)). As used herein, a "substantially dry" solid (preferably in powder form) high molecular weight CMC has a total water content of 15 wt.% or less, preferably 10 wt.% or less (in each case, wt.% being relative to the total weight of the substantially dry solid - preferably in powder form - high molecular weight CMC).

The weight average molecular weight of the at least one low molecular weight CMC is preferably less than 20 kDa, more preferably less than 15kDa.

The weight average molecular weight of the at least one high molecular weight CMC may be at least 40 kDa, and may be at least 50kDa, at least 75 kDa, or at least 100kDa.

"Weight average molecular weight" as used herein was determined using a Malvern Omnisec Gel Permeation Chromatography system with multidetector module and Viscotek ALS6000Mx2 (13 μm, 300*8.0 mm) columns. The column temperature was at 35 °C. The eluent used was 0.1 M aqueous sodium nitrate with 10% (V/V) methanol with flow rate 0.8 ml/min. The single sample injection volume was 100 ul and sample concentration 1 mg/ml. The molar mass was determined as average of three (3) injections each from a separate sample vial. The determinations were calibrated with pullulan standard (Mw 113 kDa, PDI 1.13, Polymer Standards Service). The data was processed with Omnisec 5 -software.

For the avoidance of doubt, the total amount of CMC in the CMC solution is the weight percentage of CMC in the solution (i.e., wt.% of CMC relative to the total weight of the CMC solution). The total amount of CMC in a CMC solution can be easily determined and easily controlled by persons skilled in the art using routine skills.

Preferably, the amount of low and high molecular weight CMC added in steps a) and b), respectively, is such that total amount of CMC in the CMC solution is at least 20 wt.%, preferably at least 25 wt.%, preferably at least 28 wt.%, and most preferably at least 30 wt.%, such as from about 30-40 wt% (in each case, wt.% being relative to the total weight of the CMC solution). In a preferred embodiment, the amount of low and high molecular weight CMC added in steps a) and b), respectively, is such that the total amount of CMC in the CMC solution is from about 18 to 50 wt.%, preferably from about 20 to 50 wt.%, more preferably from about 20 to 40 wt.%, and more preferably from about 30 to 40 wt. % (each being relative to the total weight of the CMC solution).

Preferably, the amount of low and high molecular weight CMC added in steps a) and b), respectively, is such that the total amount of the low molecular weight CMC in the final solution is at least about 15 wt.%, preferably at least about 18 wt.%, more preferably at least about 20 wt.%, and the total amount of high molecular weight CMC in the final solution is at least 5 wt.%, more preferably at least about 8 wt.%, more preferably at least about 10 wt.%, more preferably at least about 15 wt.% (each being relative to the total weight of the CMC solution).

Preferably, the weight ratio of the low molecular weight CMC to the high molecular weight CMC in the CMC solution (low Mw : high Mw) is from about 3:7 to 9:1, preferably about 1:2 to 5:1, more preferably about 1:2 to 4:1, and most preferably about 1:1 to 4:1.

In a preferred embodiment, the total amount of CMC in the CMC solution is from 20 to 50 wt.%, the amount of the low molecular weight CMC is from about 15 to 45 wt.%, and the amount of the high molecular weight CMC is from about 5 to 35 wt.% (in each case, wt.% being relative to the total weight of the CMC solution). In another preferred embodiment, the total amount of CMC in the CMC solution is from 20 to 40 wt.%, the amount of the low molecular weight CMC is from about 15 to 35 wt.%, and the amount of the high molecular weight CMC is from about 5 to 25 wt.% (in each case, wt.% being relative to the total weight of the CMC solution).

Preferably, the weight average molecular weight of the low molecular weight CMC is less than 20 kDa and the weight average molecular weight of the high molecular weight CMC is greater than 30 kDa. Preferably, the weight average molecular weight of the low molecular weight CMC is less than 15 kDa and the weight average molecular weight of the high molecular weight CMC is greater than 30 kDa.

Preferably, the weight average molecular weight of the low molecular weight CMC is less than 30 kDa and the weight average molecular weight of the high molecular weight CMC is greater than 50 kDa. Preferably, the weight average molecular weight of the low molecular weight CMC is less than 30 kDa and the weight average molecular weight of the high molecular weight CMC is greater than 75 kDa. Preferably, the weight average molecular weight of the low molecular weight CMC is less than 30 kDa and the weight average molecular weight of the high molecular weight CMC is greater than 100 kDa.

Preferably, the weight average molecular weight of the low molecular weight CMC is less than 20 kDa and the weight average molecular weight of the high molecular weight CMC is greater than 50 kDa. Preferably, the weight average molecular weight of the low molecular weight CMC is less than 20 kDa and the weight average molecular weight of the high molecular weight CMC is greater than 75 kDa. Preferably, the weight average molecular weight of the low molecular weight CMC is less than 20 kDa and the weight average molecular weight of the high molecular weight CMC is greater than 100 kDa.

Preferably, the weight average molecular weight of the low molecular weight CMC is less than 15 kDa and the weight average molecular weight of the high molecular weight CMC is greater than 50 kDa. Preferably, the weight average molecular weight of the low molecular weight CMC is less than 15 kDa and the weight average molecular weight of the high molecular weight CMC is greater than 75 kDa. Preferably, the weight average molecular weight of the low molecular weight CMC is less than 15 kDa and the weight average molecular weight of the high molecular weight CMC is greater than 100 kDa.

CMCs having molecular weights in accordance with the above preferred embodiments are well known in the art. Many suitable CMCs are commercially available. Any suitable method for obtaining such CMCs may be used in conjunction with the above-described method for producing a high solids content CMC solution.

The degree of substitution of the CMCs can also affect the solubility of the solid high Mw CMC in the low Mw CMC solution. In that respect, the high-Mw CMCs preferably have a degree of anionic substitution ("$DS_A$") in the range of from about 0.4 to about 1.5. The solubility of the high Mw CMC in the low Mw CMC is optimal if the high Mw CMC has a $DS_A$ within this range. The term "degree of anionic substitution" or "$DS_A$" means the average number of substituted ring sites of the beta-anhydroglucose rings of the cellulose derivative, wherein the substituent is anionic (in this instance a carboxymethyl group). Since there are three hydroxyl groups on each anhydroglucose ring of the cellulose that are available for substitution, the maximum value of $DS_A$ is 3.0.

It is also preferred if the low Mw CMC also has a degree of anionic substitution ("$DS_A$") in the range of from about 0.4 to about 1.5.

Accordingly, in a preferred embodiment, the low molecular weight CMC has a weight average molecular weight of less than 30 kDa, preferably less than 20 kDa, more preferably less than 15kDa, and the high molecular weight CMC has a $DS_A$ of about 0.4 to about 1.5 and a weight average molecular weight of at least 30 kDa, more preferably 50kDa, more preferably at least 75 kDa, more preferably at least 100kDa.

In a more preferred embodiment, the low molecular weight CMC has a $DS_A$ of about 0.4 to about 1.5 and a weight average molecular weight of less than 30 kDa, preferably less than 20 kDa, more preferably less than 15kDa, and the high molecular weight CMC has a $DS_A$ of about 0.4 to about 1.5 and a weight average molecular weight of at least 30 kDa, more preferably 50kDa, more preferably at least 75 kDa, more preferably at least 100kDa.

Thus, in a preferred embodiment, the method for producing a high solids, low viscosity CMC solution, comprises the following steps:

a) obtaining an aqueous solution comprising at least one low molecular weight carboxymethylcellulose (CMC) having a weight average molecular weight of less than 30kDa; and

b) dissolving at least one high molecular weight CMC having a weight average molecular weight of at least 30kDa into the solution of step a), wherein the at least one high molecular weight CMC is added as a (preferably substantially dry) solid (preferably in powder form) to the solution of step a),

wherein the amount of low and high molecular weight CMC added in steps a) and b) is such that the total amount of CMC in the solution is from about 20 to 50 wt.%, and the amount of low and high molecular weight CMC added in steps a) and b), respectively, is such that the amount of the low molecular weight CMC in the final solution is at least 15 wt.% and the amount of high molecular weight CMC in the final solution is at least 5 wt.% (in each case, wt.% being relative to the total weight of the CMC solution).

In a further preferred embodiment, the method for producing a high solids, low viscosity CMC solution, comprises the following steps:

a) obtaining an aqueous solution comprising at least one low molecular weight carboxymethylcellulose (CMC) having a weight average molecular weight of less than 30kDa; and

b) dissolving at least one high molecular weight CMC having a weight average molecular weight of at least 30kDa into the solution of step a), wherein the at least one substantially dry high molecular weight CMC is added as a (preferably substantially dry) solid (preferably in powder form) to the solution of step a),

wherein the amount of low and high molecular weight CMC added in steps a) and b) is such that the total amount of CMC in the solution is from about 20 to 50 wt.%, and the amount of low and high molecular weight CMC added in steps a) and b), respectively, is such that the amount of the low molecular weight CMC in the final solution is at least 15 wt.% and the amount of high molecular weight CMC in the final solution is at least 5 wt.% (in each case, wt.% being relative to the total weight of the CMC solution), and wherein the weight ratio of the low molecular weight CMC to the high molecular weight CMC in the final solution is from about 3:7 to 9:1, preferably about 1:2 to 5:1, more preferably about 1:2 to 4:1, and most preferably about 1:1 to 4:1.

In a further preferred embodiment, the method for producing a high solids, low viscosity CMC solution, comprises the following steps:

a) obtaining an aqueous solution comprising at least one low molecular weight carboxymethylcellulose (CMC) having a weight average molecular weight of less than 30kDa and a $DS_A$ of about 0.4 to about 1.5; and

b) dissolving at least one high molecular weight CMC having a weight average molecular weight of at least 30kDa and a $DS_A$ of about 0.4 to about 1.5 into the solution of step a), wherein the at least one high molecular weight CMC is added as a (preferably substantially dry) solid (preferably in powder form) to the solution of step a),

wherein the amount of low and high molecular weight CMC added in steps a) and b) is such that the total amount of CMC in the solution is from about 20 to 50 wt.%, and the amount of low and high molecular weight CMC added in steps a) and b), respectively, is such that the amount of the low molecular weight CMC in the final solution is at least 15 wt.% and the amount of high molecular weight CMC in the final solution is at least 5 wt.% (in each case, wt.% being relative to the total weight of the CMC solution), and wherein the weight ratio of the low molecular weight CMC to the high molecular weight CMC in the final solution is from about 3:7 to 9:1, preferably about 1:2 to 5:1, more preferably about 1:2 to 4:1, and most preferably about 1:1 to 4:1.

Preferably, the at least one high molecular weight CMC is added as a (preferably substantially dry) solid (preferably in powder form) to the solution of step a) at a temperature of from about 20°C to 70°C, preferably from about 25°C to 65°C, preferably from about 25°C to 60°C (i.e., the solution of step a) is preferably adjusted to a temperature of about 20°C to 70°C, preferably about 25-65°C, preferably about 25-60°C, before addition of the high molecular weight CMC). As such, in a further preferred embodiment, the method for producing a high solids, low viscosity CMC solution, comprises the following steps:

a) obtaining an aqueous solution comprising at least one low molecular weight CMC having a weight average molecular weight of less than 30kDa;

b) adjusting the temperature of the solution of step a) to about 20°C to about 70°C, and
c) dissolving at least one high molecular weight CMC having a weight average molecular weight of at least 30kDa into the solution of step b), wherein the at least one high molecular weight CMC is added as a (preferably substantially dry) solid (preferably in powder form) to the solution of step b),

wherein the amount of low and high molecular weight CMC added in steps a) and c) is such that the total amount of CMC in the solution is at least 18 wt.% (relative to the total weight of the CMC solution).

In a further preferred embodiment, the method for producing a high solids, low viscosity CMC solution, comprises the following steps:

a) obtaining an aqueous solution comprising at least one low molecular weight carboxymethylcellulose (CMC) having a weight average molecular weight of less than 30kDa and optionally a $DS_A$ of about 0.4 to about 1.5;
b) adjusting the temperature of the solution of step a) to about 25°C to 65°C, and
c) dissolving at least one high molecular weight CMC having a weight average molecular weight of at least 30kDa, and optionally a $DS_A$ of about 0.4 to about 1.5, into the solution of step b), wherein the at least one high molecular weight CMC is added as a (preferably substantially dry) solid (preferably in powder form) to the solution of step b),

wherein the amount of low and high molecular weight CMC added in steps a) and c) is such that the total amount of CMC in the solution is from about 20 to 50 wt.%, and the amount of low and high molecular weight CMC added in steps a) and b), respectively, is such that the amount of the low molecular weight CMC in the final solution is at least 15 wt.% and the amount of high molecular weight CMC in the final solution is at least 5 wt.% (in each case, wt.% being relative to the total weight of the CMC solution), and wherein the weight ratio of the low molecular weight CMC to the high molecular weight CMC in the final solution is optionally from about 3:7 to 9:1, preferably about 1:2 to 5:1, more preferably about 1:2 to 4:1, and most preferably about 1:1 to 4:1.

The present disclosure, of course, also relates to the CMC solutions produced by the above-described method and preferred embodiments thereof. As explained above, these CMC solutions are characterized in that they contain large amounts (wt.%) of CMC whilst having unexpectedly beneficial rheological properties for such solutions (notably a surprisingly low viscosity). In that respect, in a second aspect the present disclosure relates to a high solids, low viscosity CMC solution comprising:

a) water;
b) at least one low molecular weight CMC having a weight average molecular weight of less than 30kDa; and
c) at least one high molecular weight CMC having a weight average molecular weight of at least 30kDa,

wherein the total amount of CMC in the solution is at least 18 wt.% (relative to the total weight of the CMC solution), and wherein the CMC solution has a viscosity of 5000 mPas or less (Brookfield RV, 100 rpm, 40°C, spindle 6).

In a preferred embodiment, the CMC solution comprises:

a) water;
b) at least one low molecular weight CMC having a weight average molecular weight of less than 30kDa; and
c) at least one high molecular weight CMC having a weight average molecular weight of at least 30kDa,

wherein the total amount of CMC in the solution is at least 20 wt.%, wherein the amount of the low molecular weight CMC in the final solution is at least 15 wt.% and the amount of high molecular weight CMC in the final solution is at least 5 wt.% (in each case, wt.% being relative to the total weight of the CMC solution), and wherein the CMC solution has a viscosity of 5000 mPas or less (Brookfield RV, 100 rpm, 40°C, spindle 6).

In another preferred embodiment, the CMC solution comprises:

a) water;
b) at least one low molecular weight CMC having a weight average molecular weight of less than 30kDa; and
c) at least one high molecular weight CMC having a weight average molecular weight of at least 30kDa,

wherein the total amount of CMC in the solution is from about 20 to 40 wt.%, wherein the amount of the low molecular weight CMC in the final solution is at least 15 wt.% and the amount of high molecular weight CMC in the final solution is at least 5 wt.% (in each case, wt.% being relative to the total weight of the CMC solution), wherein the weight ratio of the low molecular weight CMC to the high molecular weight CMC in the final solution is from about 3:7 to 9:1, preferably about 1:2 to 5:1, more preferably about 1:2 to 4:1, and most preferably about 1:1 to 4:1., and wherein the CMC solution has a viscosity of 5000 mPas or less (Brookfield RV, 100 rpm, 40°C, spindle 6).

In another preferred embodiment, the CMC solution comprises:

a) water;
b) at least one low molecular weight CMC having a weight average molecular weight of less than 30kDa and a $DS_A$ of 0.4 to about 1.5. and
c) at least one high molecular weight CMC having a weight average molecular weight of at least 30kDa and a $DS_A$ of 0.4 to about 1.5.

wherein the total amount of CMC in the solution is from about 20 to 50 wt.%, wherein the amount of the low molecular weight CMC in the final solution is at least 15 wt.% and the amount of high molecular weight CMC in the final solution is at least 5 wt.% (in each case, wt.% being relative to the total weight of the CMC solution), wherein the weight ratio of the low molecular weight CMC to the high molecular weight CMC in the final solution is from about 3:7 to 9:1, preferably about 1:2 to 5:1, more preferably about 1:2 to 4:1, and most preferably about 1:1 to 4:1., and wherein the CMC solution has a viscosity of 5000 mPas or less (Brookfield RV, 100 rpm, 40°C, spindle 6).

Preferably, the CMC solution contains at least 40 wt.% water. In that respect, the CMC solution may contain water in an amount of from about 40 wt.% to 82 wt.%, preferably from about 50 wt.% to 80 wt.%, more preferably from about 60 wt.% to about 70 wt.% (in each case, wt.% being relative to the total weight of the CMC solution).

The CMC solutions produced by the above-described method may also comprise a plasticizer, such as, but not limited to, sorbitol, glycerol, mannitol, and/or xylitol. The plasticizer may be present in any suitable amount, such as from 1-50 wt.% (relative to the total weight of the CMC solution). The high solids content CMC solution may also comprise further additives conventionally used in barrier coating applications, such as crosslinkers, pigments, etc.

The high solids content CMC solution preferably has a pH of about 4.5 to about 7.5. An unexpected finding was that the CMC solution could be produced by the methods described with a pH in this range, which generally improved the shelf-life of the solution, irrespective of whether impurities were present in the solution.

In a third aspect, the present disclosure relates to the use of a high solids content CMC solution as described above as a surface treatment agent, e.g., barrier coating, for paper and board substrates.

In a fourth aspect, the present disclosure relates to a method for treating a surface of a paper or board substrate comprising applying a high solids content CMC solution as described above to the surface of the paper or board substrate.

In a fifth aspect, the present disclosure relates to a surface treated paper or board substrate obtainable by the method of the fourth aspect of the present disclosure.

In a sixth aspect, the present disclosure relates to the use of a high solids content CMC solution as described above as a co-binder and/or thickener.

## Examples

The following examples provide a detailed method for working the invention. These worked examples are exemplary in nature and not intended to be limitative.

### *Example 1*

As noted above, the conventional method for preparing mixtures of two different cellulose ethers is to prepare a solution of each cellulose ether and then mix the two in the required amounts to obtain the required ratio of cellulose ethers. As noted above, however, there is a limit on how much high-Mw cellulose ether can be dissolved before the resulting solution can no longer be suitably processed (i.e., is not pumpable). This limits the total maximum solids content that can be achieved for solutions containing high-Mw cellulose ethers, which in turn hinders the ability to achieve the desired barrier properties of the coating.

To exemplify this problem, two CMCs were selected:

CMC1 – Mw <30 kDa ("LMw CMC")

CMC2 – Mw >200 kDa ("HMw CMC")

For a solution of CMC1 only, it was found that the maximum total solids that could be achieved was about 35wt.%.

For a solution of CMC2 only, however, it was found that the maximum total solids that could be achieved was about 5wt.% (limited by the high Mw, >200kDa; the 5wt.% solution had a viscosity of >20000mPas at 25°C).

To increase the total solids content of a solution comprising CMC2, the inventors aimed to produce a solution wherein the solids content ratio of CMC1 to CMC2 was 80:20. This was achieved by mixing 229 grams of the solution of CMC1 and 400 grams of the solution of CMC2 to arrive at the desired solids content ratio. It was found that the total CMC content that could be achieved for an 80:20 weight ratio (CMC1:CMC2) by the conventional method (mixing solutions) was about 16 wt.%.

However, by first preparing a ~25.5% solution of the low-Mw CMC (i.e., no need for maximum solids) and then mixing (at 600 rpm and at 60 °C) the required amount (22 grams) of high-Mw CMC in a substantially dry powder form (8 wt.% moisture content) into the low-Mw CMC solution to produce the desired 80:20 ratio, it was possible to produce a CMC solution with about double the total CMC content (30 wt.%):

Table 1.

|  | Conventional | Inventive |
|---|---|---|
| CMC1 Solution, (CMC1 wt.%) | 35 (max) | 25.5 |
| CMC2 Solution, (CMC2 wt.%) | 5 (max) | -- |
| CMC2 dry material, moisture 8%, (CMC2 wt.%) | -- | 92 |
|  |  |  |
| Weight Ratio CMC1 : CMC2 | 80 : 20 | 80 : 20 |
| Final Solution Content of CMC (wt.%) | 16 (max) | 30 |
| Final Solution Content of HMw CMC (wt.%) | 3.2 (max) | 6.0 |

This demonstrates the substantial improvement provided by the present method in terms of substantially increasing not only the total quantity of CMC, but substantially increasing the total quantity of the high molecular weight CMC in the CMC solution.

The inventive CMC solution would be particularly suitable as a thickener in paper and board coatings.

*Example 2*

A further study was performed to determine whether the relative concentration of the high-Mw CMC could be further increased whilst maintaining the excellent rheological properties of the solution.

In that respect, a second set of CMCs were tested:

CMC3 – Mw <15 kDa ("LMw CMC")

CMC4 – Mw >30-40kDa ("HMw CMC")

For these CMCs, it was found that it was again possible to produce a CMC solution with a high total solids content when following the method disclosed herein. Of note is that it was possible to increase the low to high Mw CMC weight ratio to 1:1 whilst maintaining the high total amount of CMC and excellent rheological profile. To achieve this, a 25.5% solution of the low-Mw CMC (196 grams; 49.98g dry low-Mw CMC) was mixed (60°C, 600rpm) with the required amount of high-Mw CMC (~54grams; 49.68g dry high Mw-CMC) in a substantially dry form (8% moisture content) to produce the desired 1:1 ratio. The resulting CMC solution was adjusted to a final CMC content of 25 wt.% by diluting with water:

Table 2.

|  | Inventive |
|---|---|
| Weight Ratio CMC3 :CMC4 | 1 :1 |
| Final Solution Content of CMC (wt.%) | 25 |
| Final Solution Content of HMw CMC (wt.%) | 12.5 |
| Viscosity (mPas; Brookfield RV, spindle 6, 100 rpm, 40°C) | 3400 |

The inventors were unable to produce an equivalent solution with such a high concentration of the high Mw CMC and low viscosity when using other known processes (including the solution mixing process set out in Example 1); the conventional method (cf. Example 1) reached a maximum total CMC content of 17.8 wt.% (1:1 ratio, low Mw : high Mw).

As such, the inventors have now developed a method for producing CMC solutions containing, to the best of the inventors' knowledge, previously unattainable levels of HMw CMC whilst having rheological properties that make them suitable for use in paper/board coating and barrier applications.

To summarise, the inventors have developed an improved method for preparing solutions of CMCs with a substantially increased total amount of CMC, particularly with respect to the high Mw CMC, whilst maintaining excellent rheological properties.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment as contemplated herein. It should be understood that various changes may be made in the function and arrangement of elements described in an exemplary embodiment without departing from the scope of the invention as set forth in the appended claims.

**Claims**

1. A method for producing a carboxymethylcellulose (CMC) solution, the method comprising the following steps:

   a) obtaining an aqueous solution comprising at least one low molecular weight CMC having a weight average molecular weight of less than 30kDa; and
   b) dissolving at least one high molecular weight CMC having a weight average molecular weight of at least 30kDa into the solution of step a), wherein the at least one high molecular weight CMC is added as a solid to the solution of step a),

   wherein the amount of low and high molecular weight CMC added in steps a) and b), respectively, is such that the total amount of CMC in the final solution is at least 18 wt.% (relative to the total weight of the CMC solution).

2. The method of Claim 1, wherein the amount of low and high molecular weight CMC added in steps a) and b), respectively, is such that the total amount of CMC in the solution is at least 20 wt.%.

3. The method of claim 2, wherein the amount of low and high molecular weight CMC added in steps a) and b), respectively, is such that the total amount of the low molecular weight CMC in the final solution is at least about 15 wt.% and the total amount of high molecular weight CMC in the final solution is at least 5 wt.% (in each case, wt.% being relative to the total weight of the CMC solution).

4. The method of any one of Claims 1-3, wherein the weight ratio of the low molecular weight CMC to the high molecular weight CMC in the CMC solution (low Mw : high Mw) is from about 3:7 to about 9:1.

5. The method of any one of Claims 1-4, wherein the weight average molecular weight of the low molecular weight CMC is less than 20 kDa and the weight average molecular weight of the high molecular weight CMC is greater than 30 kDa.

6. The method of any one of Claims 1-5, wherein the low molecular weight CMC has a degree of anionic substitution ($DS_A$) of about 0.4 to about 1.5 and wherein the high molecular weight CMC has a degree of anionic substitution ($DS_A$) of about 0.4 to about 1.5.

7. A carboxymethylcellulose (CMC) solution comprising:

   a) water;
   b) at least one low molecular weight CMC having a weight average molecular weight of less than 30kDa; and
   c) at least one high molecular weight CMC having a weight average molecular weight of at least 30kDa,

   wherein the total amount of CMC in the solution is at least 18 wt.% (relative to the total weight of the CMC solution), and wherein the CMC solution has a viscosity 5000 mPas or less (Brookfield RV, 100 rpm, 40°C, spindle 6).

8. The CMC solution of claim 7, wherein the total amount of CMC in the solution is at least 20 wt.%, wherein the amount of the low molecular weight CMC in the solution is at least 15 wt.%, and wherein the amount of high molecular weight CMC in the solution is at least 5 wt.% (in each case, wt.% being relative to the total weight of the CMC solution).

9. The CMC solution of Claims 7 or 8, wherein the CMC solution further comprises at least one plasticizer.

10. The CMC solution of any one of Claims 7-9, wherein the CMC solution has a pH of about 4.5 to about 7.5.

11. Use of a high solids content CMC solution according to any one of Claims 7-10 as a surface treatment agent for paper and board substrates.

12. A method for treating a surface of a paper or board substrate comprising applying a CMC solution according to any one of Claims 7-10 to the surface of the paper or board substrate.

13. A surface treated paper or board substrate obtainable by the method of Claim 12.

14. Use of a high solids content CMC solution according to any one of Claims 7-10 as a co-binder and/or thickener.

**Patentansprüche**

1. Verfahren für die Herstellung einer Carboxymethylcellulose- (CMC) Lösung, wobei das Verfahren die folgenden Schritte umfasst:

   a) Erhalten einer wässrigen Lösung, die mindestens eine niedermolekulare CMC umfasst, die ein gewichtsdurchschnittliches Molekulargewicht von weniger als 30 kDa aufweist; und
   b) Lösen mindestens einer hochmolekularen CMC, die ein gewichtsdurchschnittliches Molekulargewicht von mindestens 30 kDa aufweist, in der Lösung aus Schritte a), wobei die mindestens eine hochmolekulare CMC als Feststoff der Lösung aus Schritt a) zugegeben wird,

   wobei die Menge von nieder- und hochmolekularer CMC, die jeweils in den Schritten a) und b) zugegeben wird, derart ist, dass die Gesamtmenge von CMC in der Endlösung mindestens 18 Gew.-% (mit Bezug auf das Gesamtgewicht der CMC-Losung) beträgt.

2. Verfahren nach Anspruch 1, wobei die Menge von nieder- und hochmolekularer CMC, die jeweils in den Schritten a) und b) zugegeben wird, derart ist, dass die Gesamtmenge von CMC in der Lösung mindestens 20 Gew.-% beträgt.

3. Verfahren nach Anspruch 2, wobei die Menge von nieder- und hochmolekularer CMC, die jeweils in den Schritten a) und b) zugegeben wird, derart ist, dass die Gesamtmenge von niedermolekularer CMC in der Endlösung mindestens etwa 15 Gew.-% beträgt und die Gesamtmenge von hochmolekularer CMC in der Endlösung mindestens 5 Gew.-% beträgt (wobei Gew.-% in jedem Fall auf das Gesamtgewicht der CMC-Lösung bezogen ist).

4. Verfahren nach einem der Ansprüche 1-3, wobei das Gewichtsverhältnis der niedermolekularen CMC zu der hochmolekularen CMC in der CMC-Lösung (niederes Mw : hohes Mw) etwa 3:7 bis etwa 9:1 beträgt.

5. Verfahren nach einem der Ansprüche 1-4, wobei das gewichtsdurchschnittliche Molekulargewicht der niedermolekularen CMC weniger als 20 kDa beträgt und das gewichtsdurchschnittliche Molekulargewicht der hochmolekularen CMC mehr als 30 kDa beträgt.

6. Verfahren nach einem der Ansprüche 1-5, wobei die niedermolekulare CMC einen Grad anionischer Substitution $(DS_A)$ von etwa 0,4 bis etwa 1,5 aufweist und wobei die hochmolekulare CMC einen Grad anionischer Substitution $(DS_A)$ von etwa 0,4 bis etwa 1,5 aufweist.

7. Carboxymethylcellulose- (CMC-) Lösung umfassend:

   a) Wasser
   b) mindestens eine niedermolekulare CMC, die ein gewichtsdurchschnittliches Molekulargewicht von weniger als 30 kDa aufweist; und
   c) mindestens eine hochmolekulare CMC, die ein gewichtsdurchschnittliches Molekulargewicht von mindestens 30 kDa aufweist;

   wobei die Gesamtmenge von CMC in der Lösung mindestens 18 Gew.-% (auf das Gesamtgewicht der CMC-Lösung bezogen) beträgt und wobei die CMC-Lösung eine Viskosität von 5000 mPas oder weniger (Brookfield RV, 100 U/min, 40 °C, Spindel 6) aufweist.

8. CMC-Lösung nach Anspruch 7, wobei die Gesamtmenge von CMC in der Lösung mindestens 20 Gew.-% beträgt, wobei die Menge der niedermolekularen CMC in der Lösung mindestens 15 Gew.-% beträgt und wobei die Menge von hochmolekularer CMC in der Lösung mindestens 5 Gew.-% beträgt (wobei in jedem Fall Gew.-% auf das Gesamtgewicht der CMC-Lösung bezogen ist).

9. CMS-Lösung nach Anspruch 7 oder 8, wobei die CMC-Lösung ferner mindestens einen Weichmacher umfasst.

10. CMS-Lösung nach einem der Ansprüche 7-9, wobei die CMC-Lösung einen pH-Wert von etwa 4,5 bis etwa 7,5 aufweist.

11. Verwendung einer CMC-Lösung von hohem Feststoffgehalt nach einem der Ansprüche 7-10 als Oberflächenbehandlungsmittel für Papier- und Pappesubstrate.

12. Verfahren für die Behandlung einer Oberfläche eines Papier- oder Pappesubstrats umfassend Aufbringen einer CMC-Lösung nach einem der Ansprüche 7-10 auf die Oberfläche des Papier- oder Pappesubstrats.

13. Oberflächenbehandeltes Papier- oder Pappesubstrat, das durch das Verfahren nach Anspruch 12 erhältlich ist.

14. Verwendung einer CMC-Lösung von hohem Feststoffgehalt nach einem der Ansprüche 7-10 als Co-Bindemittel und/oder Verdickungsmittel.

**Revendications**

1. Procédé de production d'une solution de carboxyméthylcellulose (CMC), le procédé comprenant les étapes suivantes :

   a) obtention d'une solution aqueuse comprenant au moins une CMC de faible poids moléculaire ayant un poids moléculaire moyen en poids inférieur à 30 kDa ; et
   b) dissolution d'au moins une CMC de poids moléculaire élevé ayant un poids moléculaire moyen en poids d'au moins 30 kDa dans la solution de l'étape a), l'au moins une CMC de poids moléculaire élevé étant ajoutée sous forme solide à la solution de l'étape a),

   dans lequel la quantité de CMC de poids moléculaires faible et élevé ajoutée respectivement aux étapes a) et b), est telle que la quantité totale de CMC dans la solution finale est d'au moins 18 % en poids (par rapport au poids total de la solution de CMC).

2. Procédé selon la revendication 1, dans lequel la quantité de CMC de poids moléculaires faible et élevé ajoutée respectivement aux étapes a) et b), est telle que la quantité totale de CMC dans la solution est d'au moins 20 % en poids.

3. Procédé selon la revendication 2, dans lequel la quantité de CMC de poids moléculaires faible et élevé ajoutée respectivement aux étapes a) et b), est telle que la quantité totale de CMC de faible poids moléculaire dans la solution finale est d'au moins environ 15 % en poids et la quantité totale de CMC de poids moléculaire élevé dans la solution finale est d'au moins 5 % en poids (dans chaque cas, le % en poids étant relatif au poids total de la solution de CMC).

4. Procédé selon l'une quelconque des revendications 1 à 3, dans lequel le rapport pondéral de la CMC de faible poids moléculaire à la CMC de poids moléculaire élevé dans la solution de CMC (Mp faible:Mp élevé) est d'environ 3:7 et environ 9:1.

5. Procédé selon l'une quelconque des revendications 1 à 4, dans lequel le poids moléculaire moyen en poids de la CMC de faible poids moléculaire est inférieur à 20 kDa et le poids moléculaire moyen en poids de la CMC de poids moléculaire élevé est supérieur à 30 kDa.

6. Procédé selon l'une quelconque des revendications 1 à 5, dans lequel la CMC de faible poids moléculaire a un degré de substitution anionique (DS$_A$) d'environ 0,4 à environ 1,5 et dans lequel la CMC de poids moléculaire élevé a un degré de substitution anionique (DS$_A$) d'environ 0,4 à environ 1,5.

7.  Solution de carboxyméthylcellulose (CMC) comprenant :

    a) de l'eau ;
    b) au moins une CMC de faible poids moléculaire ayant un poids moléculaire moyen en poids inférieur à 30 kDa ; et
    c) au moins une CMC de poids moléculaire élevé ayant un poids moléculaire moyen en poids d'au moins 30 kDa,

    dans laquelle la quantité totale de CMC dans la solution est d'au moins 18 % en poids (par rapport au poids total de la solution de CMC), et dans laquelle la solution de CMC a une viscosité inférieure ou égale à 5000 mPa·s (Brookfield RV, 100 tr/min, 40 °C, mobile 6).

8.  Solution de CMC selon la revendication 7, dans laquelle la quantité totale de CMC dans la solution est d'au moins 20 % en poids, dans laquelle la quantité de CMC de faible poids moléculaire dans la solution est d'au moins 15 % en poids, et dans laquelle la quantité de CMC de poids moléculaire élevé dans la solution est d'au moins 5 % en poids (dans chaque cas, le % en poids étant relatif au poids total de la solution de CMC).

9.  Solution de CMC selon les revendications 7 ou 8, dans laquelle la solution de CMC comprend en outre au moins un plastifiant.

10. Solution de CMC selon l'une quelconque des revendications 7 à 9, dans laquelle la solution de CMC a un pH d'environ 4,5 à environ 7,5.

11. Utilisation d'une solution de CMC à haute teneur en matières solides selon l'une quelconque des revendications 7 à 10 comme agent de traitement de surface pour des substrats en papier et en carton.

12. Procédé de traitement de surface d'un substrat en papier ou en carton comprenant l'application d'une solution de CMC selon l'une quelconque des revendications 7 à 10 sur la surface du substrat en papier ou en carton.

13. Substrat en papier ou en carton traité en surface pouvant être obtenu par le procédé selon la revendication 12.

14. Utilisation d'une solution de CMC à haute teneur en matières solides selon l'une quelconque des revendications 7 à 10 comme co-liant et/ou épaississant.

**EP 4 543 976 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4883537 A
- WO 2009061821 A
- WO 2013057132 A
- US 5080717 A